# FASCICULE DE BREVET EUROPEEN

(11) **EP 2 926 602 B1**
(45) Date de publication et mention de la délivrance du brevet: **31.10.2018**
(21) Numéro de dépôt: 13805766.6
(22) Date de dépôt: 19.11.2013
(51) Int. Cl.: H04W 52/24, H04W 72/04, H04W 52/14, H04W 52/36, H04W 72/02, H04W 72/08

(54) **PROCEDE ET SYSTEME DE DETERMINATION D'UN INTERVALLE DE FREQUENCES DANS UN RESEAU DE TELECOMMUNICATIONS**
VERFAHREN UND SYSTEM ZUR BESTIMMUNG EINES INTERVALLS VON FREQUENZEN IN EINEM TELEKOMMUNIKATIONSNETZ
METHOD AND SYSTEM FOR DETERMINING AN INTERVAL OF FREQUENCIES IN A TELECOMMUNICATIONS NETWORK

(30) Priorité: 29.11.2012 FR 1261420
(43) Date de publication de la demande: 07.10.2015
(73) Titulaire: Airbus DS SAS, 78990 Elancourt (FR)
(72) Inventeur: GEORGEAUX, Eric, F-78180 Montigny Le Bretonneux (FR); GRUET, Christophe, F-78180 Montigny le Bretonneux (FR); FRAYSSE, Frédéric, F-78210 Saint Cyr l'Ecole (FR); LERAUT, Christophe, F-78180 Montigny le Bretonneux (FR)
(74) Mandataire: Cabinet Camus Lebkiri
(86) Numéro de dépôt international: PCT/EP2013/003491
(87) Numéro de publication internationale: WO 2014/082718

(56) Documents cités:
- WO-A1-2010/082888
- WO-A1-2010/112066

## Description

### DOMAINE DE L'INVENTION

L'invention concerne le domaine des réseaux de télécommunications, notamment large-bande, et se rapporte plus particulièrement à un procédé et à un système de détermination d'un intervalle de fréquences d'émission d'un signal par un équipement d'utilisateur à destination d'une station de base dans un réseau de télécommunications.

### ÉTAT DE LA TECHNIQUE

Dans les réseaux de télécommunications, par exemple les réseaux large-bande du type Long-Term Evolution (LTE), une station de base alloue de manière connue des ressources à un équipement d'utilisateur de sorte qu'il puisse émettre des signaux comprenant des paquets de données à destination de ladite station de base. D'une part, la station de base détermine, un ou plusieurs intervalles de temps pendant lesquels un équipement d'utilisateur donné pourra émettre des signaux. D'autre part, la station de base détermine, dans une bande de fréquences prédéterminée sur laquelle elle travaille, au moins un intervalle de fréquences d'émission sur lequel ledit équipement d'utilisateur pourra émettre lesdits signaux pendant lesdits intervalles de temps.

La station de base détermine aussi le type de modulation et le type de codage des signaux que l'équipement d'utilisateur pourra utiliser pour émettre des signaux sur lesdits intervalles de temps et de fréquences alloués. L'allocation de ressources et les choix de modulation et de codage peuvent être réalisés, par exemple, en fonction de la puissance du signal reçu de l'équipement d'utilisateur par la station de base et/ou en fonction d'autres équipements d'utilisateur qui émettent des signaux également à destination de la station de base.

Ces informations d'allocation de ressources sont ensuite communiquées à l'équipement d'utilisateur qui peut alors émettre, à destination de la station de base, des signaux en ajustant sa puissance d'émission à un niveau inférieur ou égal à sa puissance maximum sur les intervalles alloués en utilisant le type de modulation et le type de codage préalablement déterminés par la station de base.

Il arrive toutefois que les signaux émis par l'équipement d'utilisateur sur l'intervalle de fréquences d'émission alloué soient également émis, à plus faible puissance, aux fréquences voisines de celle de l'intervalle de fréquences alloué, le niveau de ces émissions en dehors de l'intervalle de fréquences alloué étant en général d'autant plus élevé que la puissance d'émission de l'équipement utilisateur est proche de sa puissance maximum d'émission.

Un problème se pose alors lorsque les signaux sont émis hors-bande par l'équipement d'utilisateur, c'est-à-dire à des fréquences situées hors de la bande de fréquences prédéterminée de travail de la station de base, et que leur puissance est supérieure à une valeur limite maximale prédéterminée. Une telle limite, fixée par exemple à -57 dBm mesurée dans une bande de 6.25kHz dans l'intervalle 769-775 MHz dans la norme 3GPP TS36.101, permet d'éviter que les signaux émis par l'équipement d'utilisateur dans une bande de fréquences prédéterminée (l'intervalle 777-787 MHz pour la limite citée précédemment en exemple) ne créent des interférences avec des signaux émis sur les bandes de fréquences voisines qui peuvent être réservées à d'autres utilisations.

Ce problème se pose notamment dans les réseaux de télécommunication dans lesquels l'écart duplex (i.e. la séparation en fréquence entre le signal d'émission et le signal de réception) est faible. Les signaux émis hors bande par l'émetteur de l'équipement d'utilisateur peuvent perturber la réception des signaux en provenance de la station de base, entrainant une désensibilisation du récepteur. Le problème est particulièrement gênant dans le cas où l'atténuation du signal liée à la propagation entre l'équipement d'utilisateur et la station de base est élevée: dans ces conditions, l'équipement d'utilisateur doit émettre à une puissance proche ou égale à sa puissance maximum ce qui en général augmente le niveau des émissions hors-bande et donc le risque de désensibilisation du récepteur alors que les signaux émis par la station de base sont reçus à un niveau faible par l'équipement d'utilisateur.

Afin de respecter cette valeur limite maximale de puissance, une solution existante décrite dans le brevet US8055294, consiste à autoriser l'équipement d'utilisateur à réduire sa puissance maximum d'émission d'une valeur, dite de réduction de la puissance maximum (Maximum Power Réduction (MPR) en langue anglaise), que l'équipement d'utilisateur sélectionne dans une table de références stockée dans sa mémoire interne. Plus précisément, l'équipement d'utilisateur sélectionne, dans un premier temps, dans la table de références une valeur de réduction de puissance maximum en fonction d'un index de début d'intervalle de fréquences et d'une largeur dudit intervalle de fréquences reçus de la station de base. Puis, dans un second temps, l'équipement d'utilisateur réduit sa puissance d'émission du nombre de décibels correspondants à la valeur sélectionnée dans la table. Cependant, un problème se pose pour la station de base lors de l'allocation des ressources et du type de schéma de codage et de modulation car elle ne connaît pas la valeur de réduction de puissance maximum utilisée par l'équipement d'utilisateur.

Ainsi, afin d'allouer le type de schéma de codage et de modulation ainsi que les intervalles de temps et de fréquences à un équipement d'utilisateur, une première solution existante consiste, pour la station de base, à considérer que l'équipement a réduit sa puissance d'émission, par exemple d'une valeur prédéterminée. Cependant, dans un tel cas, lorsque l'équipement d'utilisateur n'a pas réduit sa puissance d'émission, le schéma de codage et de modulation ainsi que les intervalles de temps et de fréquences alloués par la station de base ne sont pas nécessairement adaptés aux besoins de l'équipement d'utilisateur qui ne peut émettre autant de paquets de données qu'il ne le pourrait réellement, ce qui présente un inconvénient.

Une deuxième solution consiste, pour la station de base, à considérer que l'équipement d'utilisateur ne réduit pas sa puissance d'émission d'une valeur de MPR. Toutefois, dans un tel cas, lorsque l'équipement d'utilisateur a réellement réduit sa puissance d'émission d'une valeur de MPR, le schéma de codage et de modulation ainsi que les intervalles de temps et de fréquences alloués par la station de base ne sont pas adaptés à ses besoins réels et les paquets de données émis par l'équipement d'utilisateur sont reçus par la station de base avec une probabilité d'erreur de décodage élevée, ce qui présente là aussi un inconvénient.

En outre, la réduction par l'équipement d'utilisateur de sa puissance d'émission peut être très importante afin de respecter la valeur limite maximale de puissance hors-bande requise. Ainsi, par exemple, une réduction de la puissance d'émission de 6 dB correspond à une division de la puissance d'émission par 4, ce qui empêchera l'équipement d'utilisateur d'émettre de grandes quantités de données et/ou lui imposera de devoir réémettre certaines des trames de données qui auront été émises à puissance faible et reçues en erreur par la station de base, ce qui présente un autre inconvénient.

Le document WO 2010/082888 intitulé « Method and arrangement in a wireless communication system » et le document WO 2010/112066 intitulé « Controlling UE emissions for avoiding self-interference and for demanding coexistence situations » sont connus de l'état de la technique.

### EXPOSÉ DE L'INVENTION

L'invention vise à éliminer au moins en partie ces inconvénients et à améliorer les systèmes de télécommunication existants et notamment de permettre l'émission de signaux à une puissance élevée par un équipement d'utilisateur dans un intervalle de fréquences alloué tout en assurant que la puissance des signaux émis à une fréquence d'émission hors-bande prédéfinie est inférieure à une valeur limite de puissance prédéterminée.

Ainsi, l'invention a pour objet un procédé de détermination d'un intervalle de fréquences d'émission, par un équipement d'utilisateur, d'un signal à destination d'une station de base dans un réseau de télécommunication, ledit intervalle de fréquences étant compris dans une bande de fréquences prédéterminée sur laquelle travaille la station de base, ledit procédé comprenant une étape de détermination dudit intervalle de fréquences, le procédé étant remarquable en ce que ladite étape de détermination de l'intervalle de fréquences est réalisée à partir d'une table de références comprenant des valeurs de réduction de puissance maximum d'émission d'un signal par l'équipement d'utilisateur de sorte que la puissance du signal émis par l'équipement d'utilisateur à une fréquence hors-bande prédéfinie soit inférieure à une valeur limite maximale de puissance prédéterminée.

L'intervalle de fréquences sur lequel émet l'équipement d'utilisateur est ainsi déterminé à partir de la table de références pour assurer que la puissance des signaux émis hors-bande par l'équipement d'utilisateur soit inférieure à la valeur limite prédéterminée.

Par les termes « fréquence hors-bande », on entend une fréquence située en dehors de la bande de fréquences prédéterminée sur laquelle travaille la station de base. Par le terme « travaille », on entend que la station de base alloue des intervalles de fréquences dans la bande de fréquences prédéterminée et que, par conséquent, elle est configurée pour recevoir des signaux émis par l'équipement d'utilisateur sur cette bande de fréquence prédéterminée. Enfin, par les termes « émission d'un signal par un équipement d'utilisateur », on entend bien entendu l'émission d'un ou plusieurs signaux par l'équipement à destination de la station de base.

De préférence, la table de références indique une valeur de réduction de puissance d'émission de signal en fonction, d'une part, d'une valeur de début d'un intervalle de fréquences et, d'autre part, d'une valeur de largeur dudit intervalle de fréquences à partir de ladite valeur de début d'intervalle.

La table de références peut être construite de manière empirique de sorte qu'elle comprend uniquement des combinaisons de début d'intervalle de fréquences et de largeur d'intervalle de fréquences pour lesquelles la puissance d'émission de l'équipement d'utilisateur à la fréquence hors-bande prédéfinie est inférieure à la valeur limite maximale de puissance prédéterminée. La table de références peut être, par exemple, la table de références de la spécification 3GPP TS36.101.

De préférence encore, le début de l'intervalle de fréquences et la largeur de l'intervalle de fréquences sont sélectionnés de sorte que la puissance d'émission du signal par l'équipement d'utilisateur soit maximum.

Selon un aspect de l'invention, le début de l'intervalle de fréquences et la largeur de l'intervalle de fréquences sont sélectionnés dans la table de références de sorte que la quantité d'information transférée soit maximale. Dans ce cas, le choix du début de l'intervalle de fréquences et de sa largeur peut conduire à réduire la puissance d'émission d'une valeur de réduction de puissance MPR. Un critère de sélection peut consister à rechercher dans la table de références le ou les couples de valeurs de début d'intervalle de fréquences RBStart et de largeur d'intervalle de fréquences L_CRB pour lesquels la valeur 10.log₁₀(L_CRB)-MPR(RbStart, L_CRB) prend sa valeur maximale.

Selon un aspect de l'invention, le réseau de télécommunications comprend au moins une station de base configurée pour allouer, à l'équipement d'utilisateur, au moins un intervalle de fréquences compris dans la bande de fréquences prédéterminée et recevoir des signaux émis par l'équipement d'utilisateur dans l'intervalle alloué.

Dans un mode de réalisation du procédé selon l'invention, l'étape de détermination de l'intervalle de fréquences est réalisée par la station de base. Dans ce cas, l'intervalle de fréquences alloué par la station de base correspond à l'intervalle de fréquences déterminé. En d'autres termes, la station de base détermine l'intervalle de fréquences à allouer à l'équipement d'utilisateur à partir de la table de références. La station de base peut aussi utiliser, en plus de la table de références, par exemple, une information de la valeur de la puissance d'émission de l'équipement d'utilisateur. Cette information peut être, par exemple, la mesure, envoyée par l'équipement d'utilisateur à la station de base, indiquant la différence (en dB) entre la puissance d'émission réelle et la puissance maximum d'émission, éventuellement réduite, de l'équipement d'utilisateur appelée Power Headroom (PH) reporting en langue anglaise.

Avantageusement, la table de références est stockée dans une base de données accessible par la station de base et le procédé comprend, préalablement à l'étape de détermination, une étape d'accès à ladite base de données pour consulter ou obtenir la table de références.

Selon un aspect de l'invention, le procédé comprend, préalablement à l'étape de détermination, une étape de réception de la table de références, par exemple envoyée par l'équipement d'utilisateur.

Dans un mode de réalisation alternatif du procédé selon l'invention, l'étape de détermination de l'intervalle de fréquences est réalisée par l'équipement d'utilisateur. La table de références étant propre à chaque terminal d'utilisateur, il n'est ainsi pas nécessaire, pour le terminal, de l'envoyer à la station de base ou bien, pour la station de base, de la stocker en permanence.

Dans ce mode de réalisation, la station de base alloue de manière connue un intervalle de fréquences sur lequel l'équipement d'utilisateur peut émettre et l'équipement d'utilisateur détermine, à partir de sa table de références, un intervalle de fréquences pour lequel la puissance d'émission des signaux hors-bande est inférieure à la valeur limite prédéterminée, ledit intervalle de fréquences à utiliser étant compris dans l'intervalle de fréquences alloué. Par le terme « compris », on entend que l'intervalle de fréquences déterminé est un sous-intervalle de l'intervalle de fréquences alloué ou bien correspond à l'intervalle de fréquences alloué lui-même.

Avantageusement, l'équipement d'utilisateur comprend une mémoire dans laquelle est stockée la table de références.

Selon un aspect de l'invention, l'intervalle de fréquences déterminé est constitué d'un ou plusieurs blocs fréquentiels consécutifs et l'étape de détermination comprend une étape de sélection, dans la table de références, d'un premier bloc fréquentiel et d'un nombre de blocs fréquentiels consécutifs audit premier bloc formant ainsi l'intervalle de fréquence.

L'invention concerne aussi un système de télécommunications pour la détermination d'un intervalle de fréquences d'émission, par un équipement d'utilisateur, d'un signal à destination d'une station de base dans un réseau de télécommunication, de préférence large-bande, ledit système comprenant au moins une station de base configurée pour travailler sur une bande de fréquences prédéterminée et au moins un équipement d'utilisateur configuré pour émettre des signaux sur ladite bande de fréquences prédéterminée, ledit système étant remarquable en ce qu'il comprend des moyens de détermination de l'intervalle de fréquences à partir d'une table de références comprenant des valeurs de réduction de puissance maximum d'émission de signal par l'équipement d'utilisateur de sorte que la puissance du signal émis par l'équipement d'utilisateur à une fréquence hors-bande prédéfinie soit inférieure à une valeur limite maximale de puissance prédéterminée.

L'invention concerne aussi une station de base pour la détermination d'un intervalle de fréquences d'émission, par un équipement d'utilisateur, d'un signal à destination de ladite station de base dans un réseau de télécommunication, ledit intervalle de fréquences étant compris dans une bande de fréquences prédéterminée sur laquelle travaille la station de base, la station de base étant remarquable en ce qu'elle comprend des moyens de détermination de l'intervalle de fréquences à partir d'une table de références comprenant des valeurs de réduction de puissance maximum d'émission de signal par l'équipement d'utilisateur de sorte que la puissance du signal émis par l'équipement d'utilisateur à une fréquence hors-bande prédéfinie soit inférieure à une valeur limite maximale de puissance prédéterminée.

L'invention concerne aussi un équipement d'utilisateur pour la détermination d'un intervalle de fréquences d'émission, par ledit équipement d'utilisateur, d'un signal à destination d'une station de base dans un réseau de télécommunications, ledit intervalle de fréquences étant compris dans une bande de fréquences prédéterminée sur laquelle travaille ladite station de base et sur laquelle l'équipement d'utilisateur est configuré pour émettre des signaux, l'équipement d'utilisateur étant remarquable en ce qu'il comprend des moyens de détermination de l'intervalle de fréquences à partir d'une table de références comprenant des valeurs de réduction de puissance maximum d'émission de signal par l'équipement d'utilisateur de sorte que la puissance du signal émis par l'équipement d'utilisateur à une fréquence hors-bande prédéterminée soit inférieure à une valeur limite maximale de puissance prédéterminée.

L'invention concerne aussi un support de programme d'ordinateur pour la mise en oeuvre, par une station de base ou par un équipement d'utilisateur, des étapes du procédé tel que défini-ci-dessus.

D'autres caractéristiques et avantages de l'invention apparaîtront lors de la description qui suit faite en regard des figures annexées données à titre d'exemples non limitatifs et dans lesquelles des références identiques sont données à des objets semblables :
- la figure 1 illustre le système de télécommunications selon l'invention ;
- la figure 2 illustre une station de base selon une forme de réalisation de l'invention ;
- la figure 3 illustre un équipement d'utilisateur selon une forme de réalisation de l'invention ;
- la figure 4 illustre le procédé mis en oeuvre par une station de base dans un premier mode de réalisation de l'invention ;
- la figure 5 illustre le procédé mis en oeuvre par un équipement d'utilisateur dans un second mode de réalisation de l'invention ;
- la figure 6 illustre un exemple de table de références comprenant des valeurs de réduction de puissance maximum d'émission en fonction du début et de la largeur d'un intervalle de fréquences ;
- la figure 7 représente deux trames de ressources comprenant chacune un intervalle de temps déterminé par la seconde forme du procédé selon l'invention ;
- la figure 8 représente des courbes de puissance d'émission de signaux, par un équipement d'utilisateur, selon l'art antérieur et selon l'invention.

### DESCRIPTION DETAILLEE

L'invention a été réalisée dans le cadre d'un réseau large-bande du type Long-Term Evolution (LTE) mais il va de soi qu'elle peut trouver son application dans tout autre réseau de télécommunications.

### Description du système selon l'invention

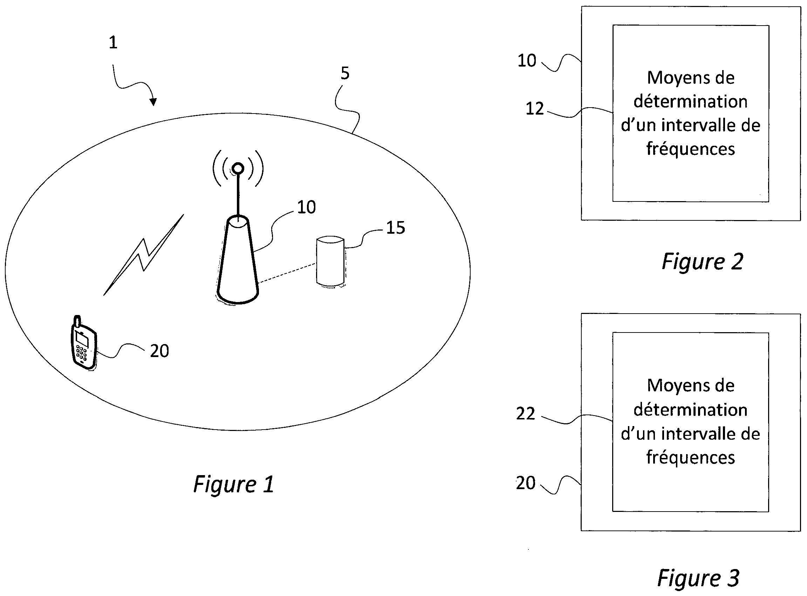

Comme illustré par la figure 1, le système 1 selon l'invention comprend un réseau de télécommunications 5, une station de base 10 et un équipement d'utilisateur 20. Une seule station de base et un seul équipement d'utilisateur ont été représentés par souci de simplification mais il va de soi qu'un tel système peut comprendre plusieurs stations de base, chacune d'entre elles pouvant communiquer avec un ou plusieurs équipements d'utilisateur.

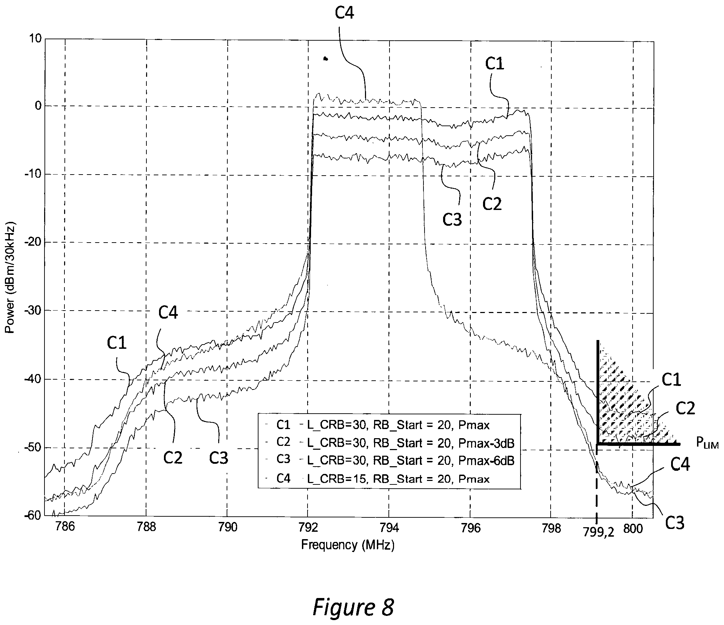

Le réseau de télécommunications 5 permet à l'équipement d'utilisateur 20 d'émettre des signaux de manière connue en utilisant des ressources allouées par la station de base 10. Dans cet exemple, comme illustré à la figure 8, la station de base 10 travaille sur une bande de fréquences prédéterminée en réception comprise entre 788 MHz et 798 MHz appelée bande 14 dans la norme 3GPP TS36.101 (Table 5.5-1). Les ressources allouées sont de nature temporelle et fréquentielle et sont définies dans des trames consécutives de 10 ms s'étendant sur la bande de fréquences prédéterminées. Chaque trame est divisée en blocs temporels et fréquentiels. Dans la norme 3GPP TS36.211, une trame est divisée en 10 sous-trames de 1 ms et chaque sous-trame est subdivisée en 14 blocs temporels de durée égale comprenant les données à émettre (par exemple, des symboles Orthogonal Frequency Division Multiplexing (OFDM)) et 50 blocs fréquentiels de 180 kHz chacun dans le cas d'un réseau de télécommunications LTE 10MHz configuré avec un préfixe cyclique de durée standard (nommé "normal CP" dans la spécification 3GPP TS36.211).

Lors d'une allocation de ressources pour un équipement d'utilisateur 20, la station de base 10 détermine ainsi dans chaque trame un ou plusieurs blocs temporels définissant un intervalle de temps alloué et un ou plusieurs blocs fréquentiels définissant un intervalle de fréquences alloué sur lequel l'équipement d'utilisateur 20 est autorisé à émettre des signaux à destination de la station de base 10 pendant la durée de l'intervalle de temps alloué. L'allocation de ressources par la station de base peut être différente pour chaque trame ou bien être définie pour un nombre déterminé de trames consécutives.

Lorsqu'elle alloue des blocs fréquentiels, c'est-à-dire un intervalle de fréquence, à un équipement d'utilisateur 20, la station de base 10 détermine une valeur de début RBstart (Resource Block start) indiquant le numéro du premier bloc fréquentiel de l'intervalle de fréquences alloué ainsi que le nombre de blocs fréquentiels L_CRB constituant l'intervalle de fréquences alloué.

La station de base 10 détermine aussi le type de modulation et le type de codage des signaux que l'équipement d'utilisateur 20 pourra utiliser pour émettre des signaux sur les intervalles de temps et de fréquences alloués.

Une fois déterminées, la station de base 10 envoie les informations d'allocation de ressources RBstart et L CRB, ainsi que le type de modulation et le type de codage déterminés de sorte que l'équipement d'utilisateur 20 puisse ensuite émettre sur l'intervalle alloué, pendant la durée de la trame suivante, des signaux modulés et codés selon la modulation et le codage déterminés. La station de base peut en outre indiquer le nombre de trames pour lesquelles les allocations de ressources et de modulation et codage sont faites. Bien entendu, la station de base peut aussi allouer un nombre de blocs temporels dans une trame ou plusieurs trames de sorte que l'équipement d'utilisateur émette pendant lesdits blocs. Par exemple, la station de base 10 peut allouer à l'équipement d'utilisateur 20 un début d'intervalles de fréquences RBStart=0 et une largeur d'intervalles de fréquences L_CRB=4 pour toutes les sous-trames (numérotés de 0 à 9) de rang 3 et les trames de rang pair. Il émettra avec l'exemple précédent 1ms toutes les 20ms.

La station de base 10 peut ensuite mesurer de manière connue la puissance des signaux reçus de l'équipement d'utilisateur 20 afin d'adapter le type de modulation et/ou de codage et/ou modifier les intervalles de temps et de fréquences à allouer ultérieurement à l'équipement d'utilisateur.

La figure 2 illustre une station de base 10 selon une forme de réalisation du système l'invention. La station de base 10 peut être reliée à une base de données 15 du système 1 (illustrée sur la figure 1). Par exemple, une telle base de données 15 peut être comprise dans la station de base 10 ou bien être externe. La base de données 15 est apte à stocker au moins une table de références comprenant des valeurs de réduction de puissance maximum d'émission d'un signal d'un équipement d'utilisateur 20.

Dans cette forme de réalisation, la station de base 10 comprend des moyens de détermination 12 de l'intervalle de fréquences, à allouer à l'équipement d'utilisateur 20, à partir d'une table de références comprenant des valeurs de réduction de puissance maximum MPR d'émission de signal de l'équipement d'utilisateur de sorte que la puissance du signal émis par l'équipement d'utilisateur à une fréquence hors-bande prédéfinie soit inférieure à une valeur limite maximale de puissance prédéterminée. Par le terme « MPR », on entend une valeur de réduction de puissance maximum MPR, une valeur additionnelle de réduction de puissance maximum A-MPR (Additional-Maximum Power Reduction en langue anglaise) ou bien une valeur de réduction de puissance maximum P-MPR (Power Management Maximum Power Réduction).

La figure 3 illustre un équipement d'utilisateur 20 selon une autre forme de réalisation du système selon l'invention. L'équipement d'utilisateur 20 est apte à stocker et/ou recevoir au moins une table de références comprenant des valeurs de réduction de puissance maximum MPR d'émission de signal par l'équipement d'utilisateur 20. L'équipement d'utilisateur 20 comprend des moyens de détermination 22 de l'intervalle de fréquences, à utiliser pour émettre des signaux, à partir d'une table de références comprenant des valeurs de réduction de puissance maximum MPR d'émission de signal par l'équipement d'utilisateur 20 de sorte que la puissance du signal émis par l'équipement d'utilisateur à une fréquence hors-bande prédéterminée soit inférieure à une valeur limite maximale de puissance prédéterminée.

### Mise en oeuvre de l'invention

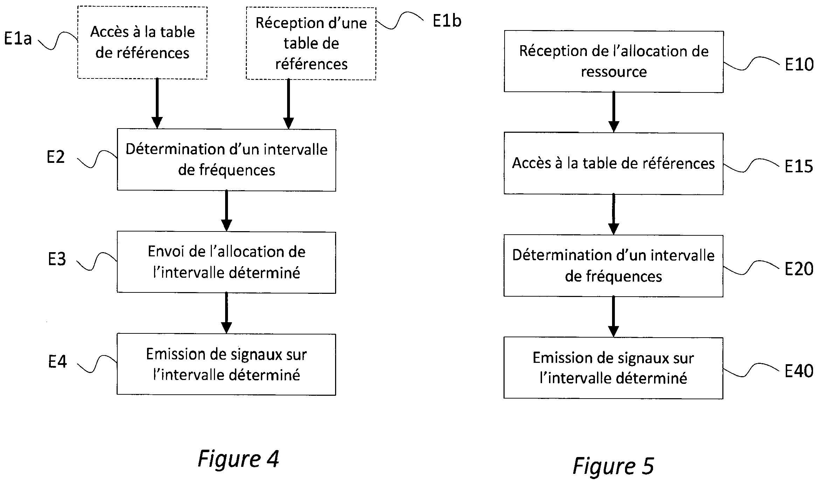

Les figures 4 et 5 décrivent deux modes de réalisation du procédé selon l'invention. Le procédé selon l'invention permet la détermination d'un intervalle de fréquences d'émission de signaux par l'équipement d'utilisateur 20 à destination de la station de base 10 dans le réseau de télécommunication 5.

L'étape de détermination (E2, E20) de l'intervalle de fréquences est réalisée à partir d'une table de références comprenant des valeurs de réduction de puissance maximum d'émission de signal par l'équipement d'utilisateur de sorte que la puissance du signal émis par l'équipement d'utilisateur à une fréquence hors-bande prédéterminée soit inférieure à une valeur limite maximale de puissance prédéterminée.

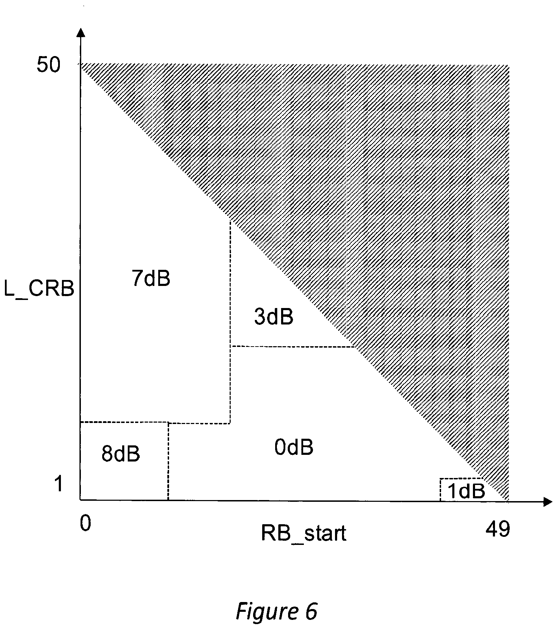

Dans cet exemple, la table de références permet de déterminer une valeur d'atténuation de puissance d'émission du signal par l'équipement d'utilisateur 20 en fonction, d'une part, d'une valeur de début de bloc fréquentiel RBstart et, d'autre part, d'un nombre de blocs fréquentiels L_CRB. Une table de références est associée à un type d'équipement d'utilisateur et peut être construite, par exemple, de manière empirique afin de s'assurer que la puissance d'émission délivrée par l'équipement d'utilisateur est inférieure à une valeur limite prédéfinie à une fréquence hors-bande prédéterminée pour chaque couple de valeurs (RBstart ; L CRB) de la table. La figure 6 illustre un exemple de table de références, correspondant à un type d'équipement d'utilisateur, dans laquelle à chaque couple (RBstart, L_CRB) de valeurs de début d'intervalles et de largeur d'intervalles correspond une valeur de réduction de puissance maximum MPR à appliquer pour garantir que la puissance d'émission hors-bande de l'équipement d'utilisateur est inférieure à la limite prédéfinie. Par exemple, pour RBstart=0 et L_CRB=25 alors MPR=7 dB.

La figure 4 décrit un premier mode de réalisation du procédé selon l'invention dans lequel l'étape de détermination E2 est réalisée par la station de base 10. La station de base 10 accède, dans une étape Ela, à une table de références stockée dans la base de données 15 et comprenant des valeurs de réduction de puissance maximum d'émission de signal de l'équipement d'utilisateur. Dans un tel cas, il n'est pas nécessaire pour l'équipement d'utilisateur de stocker la table de références. La base de données 15 peut stocker les différents types de tables de références associés aux différents types d'équipements d'utilisateurs 20 aptes à requérir une allocation de ressources pour émettre des signaux à destination de la station de base 10.

En variante, la station de base 10 reçoit la table de références dans une étape Elb puis la stocke dans la base de données 15 ou dans une mémoire temporaire (non représentée) de sorte à pouvoir l'utiliser ultérieurement. Dans un tel cas, la table de références peut être envoyée, par exemple, par l'équipement d'utilisateur 20.

La station de base 10 détermine ensuite, dans une étape E2, un intervalle de fréquences à partir de la table de références stockée ou reçue de sorte que la puissance du signal émis par l'équipement d'utilisateur 20 à une fréquence hors-bande prédéterminée soit inférieure à une valeur limite maximale de puissance prédéterminée.

Dans ce mode de réalisation, la table de références est utilisée par la station de base 10 pour effectuer l'allocation des ressources fréquentielles de l'équipement d'utilisateur 20. En d'autres termes, la station de base 10 détermine la valeur de début de bloc fréquentiel RBstart et le nombre de blocs fréquentiels L_CRB à allouer à l'équipement d'utilisateur 20 en fonction des valeurs d'atténuation de puissance contenues dans la table de références. Par exemple, la station de base peut déterminer RBstart et L_CRB de sorte que la valeur de réduction de puissance MPR soit minimum, par exemple nulle, pour l'équipement d'utilisateur 20. Bien entendu, la station de base peut aussi tenir en compte d'autres paramètres pour effectuer l'allocation des ressources tels que des indications envoyées par l'équipement d'utilisateur sur la puissance courante de son émetteur (Power Headroom (PH) reporting en langue anglaise) ou des estimations de l'atténuation liée à la propagation du signal entre la station de base et l'équipement d'utilisateur..

Une fois déterminées, les informations d'allocation de ressources, telles que la valeur de début de bloc fréquentiel RBstart et le nombre de blocs fréquentiels L_CRB, sont envoyées, dans une étape E3, à l'équipement d'utilisateur 20.

L'équipement d'utilisateur 20 émet alors, dans une étape E4, des signaux à destination de la station de base 10 sur l'intervalle de fréquences déterminé par les valeurs de RBstart et de L CRB reçues de la station de base 20 pendant la durée de la sous-trame temporelle correspondante.

La figure 5 illustre un autre mode de réalisation du procédé selon l'invention dans lequel l'étape de détermination E20 est réalisée par l'équipement d'utilisateur 20 sur lequel est stockée, dans une mémoire (non représentée), la table de références comprenant des valeurs de réduction de puissance maximum d'émission de signal par l'équipement d'utilisateur 20.

Dans ce mode de réalisation, l'équipement d'utilisateur 20 reçoit tout d'abord, dans une étape E10, les informations d'allocation de ressources envoyées par la station de base 10. Dans ce mode de réalisation, la station de base 10 alloue les ressources de la manière connue de l'art antérieur. L'équipement d'utilisateur 20 reçoit notamment une valeur de RBstart et une valeur de L CRB allouées de manière connue par la station de base 10. La station de base peut, par exemple, répartir les ressources radio dans les domaines temporel et fréquentiel entre les différents équipements d'utilisateur qui lui sont connectés en fonction des débits d'information que les équipements d'utilisateur doivent envoyer au réseau, de leurs priorités relatives et/ou de la qualité de la réception des signaux émis par lesdits équipements d'utilisateur.

L'équipement d'utilisateur 20 accède, dans une étape E15, à la table de références de valeurs de réduction de puissance d'émission stockée dans sa mémoire interne (non représentée). Dans une étape E20, l'équipement d'utilisateur 20 détermine, à partir de la table de références, un intervalle de fréquences à utiliser pour émettre ses signaux, cet intervalle de fréquences étant déterminé de sorte que la puissance du signal émis par l'équipement d'utilisateur 20 à une fréquence hors-bande prédéterminée soit inférieure à une valeur limite maximale de puissance prédéterminée. L'intervalle de fréquences déterminé par l'équipement d'utilisateur 20 est compris dans l'intervalle de fréquences alloué reçu de la station de base 10, c'est-à-dire qu'il est soit une portion de l'intervalle de fréquences alloué par la station de base 10, soit l'intervalle entier.

L'équipement d'utilisateur 20 sélectionne dans sa table de références les valeurs de RBstart et de L_CRB de sorte à minimiser l'atténuation de sa puissance maximum d'émission tout en s'assurant que l'intervalle de fréquences, déterminé par les valeurs de RBstart et de L_CRB sélectionnées, soit compris dans l'intervalle de fréquences alloué par la station de base 10. En effet, la table de références permettant de s'assurer que la puissance de l'équipement d'utilisateur 20 ne dépasse pas les limites hors-bande requises, le choix de nouvelles valeurs de RBstart et de L_CRB dans la table de références, comprises dans l'intervalle de fréquences alloué, permettent de maximiser la puissance maximum d'émission tout en respectant les limites de puissance hors-bande.

L'équipement d'utilisateur 20 émet ensuite, dans une étape E40, des signaux à destination de la station de base 10 sur l'intervalle de fréquences déterminé par exemple pendant la durée de la ou des sous-trames temporelles allouées par la station de base 10. L'équipement d'utilisateur 20 peut modifier l'intervalle de fréquences à utiliser dans chaque trame en fonction de la combinaison optimum de RBstart et de L CRB dans la table de références pour l'intervalle alloué par la station de base 10 qui peut varier d'une trame à l'autre.

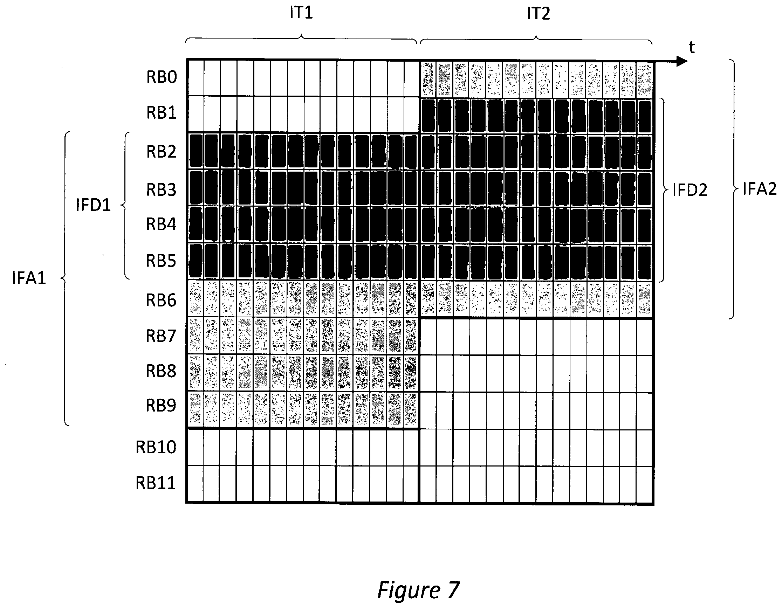

La figure 7 illustre deux sous-trames consécutives IT1 et IT2 comprenant 14 blocs temporels (pendant lesquels peuvent être émis les données telles que, par exemple, des symboles OFDM) et 12 blocs fréquentiels s'étendant de RB0 à RB11. Dans la trame IT1, la station de base 10 a alloué à l'équipement d'utilisateur 20 l'intervalle de fréquences IFA1 débutant au troisième bloc fréquentiel RB2 (RBstart = 2) et s'étendant jusqu'au dixième bloc fréquentiel RB9 inclus. Dans la trame IT2, la station de base 10 a alloué à l'équipement d'utilisateur 20 l'intervalle de fréquences IFA2 débutant au premier bloc fréquentiel RB0 et s'étendant jusqu'au septième bloc fréquentiel RB6 inclus.

Dans cet exemple, l'équipement d'utilisateur 20 a sélectionné, lors de l'étape E20, dans sa table de références, l'intervalle de fréquences IFD1 défini par le couple de valeurs (RBstart = 2, L_CRB = 4) s'étendant du troisième bloc fréquentiel RB2 jusqu'au sixième bloc fréquentiel RB5 inclus de sorte à minimiser l'atténuation de sa puissance d'émission tout en assurant que la puissance d'émission hors-bande soit inférieure à la limite prédéterminée. Dans la trame suivante IT2, l'équipement d'utilisateur 20 a sélectionné, lors de l'étape E20, dans sa table de références, l'intervalle de fréquences IFD2 défini par le couple de valeurs (RBstart = 1, L_CRB = 5) s'étendant du bloc RB1 jusqu'au bloc RB5 inclus de sorte à minimiser l'atténuation de sa puissance d'émission tout en assurant que la puissance d'émission hors-bande soit inférieure à la limite prédéterminée. En variante ou en complément, le choix de RBstart et de L_CRB dans la table de références peut être réalisé de sorte à sélectionner L CRB le plus grand pour émettre sur un intervalle de fréquences le plus large possible tout en restant dans l'intervalle de fréquences alloué.

Dans le second mode de réalisation, la station de base 10 peut en outre être configurée pour déterminer l'intervalle de fréquences utilisé par l'équipement d'utilisateur 20, par exemple, à partir des signaux reçus de l'équipement d'utilisateur 20. Par exemple, dans un réseau LTE, la taille des blocs de ressources est définie de manière connue par un index I_{TBS} et un numéro de bloc physique de ressources N_{PRB}. Lorsque l'équipement d'utilisateur 20 détermine un intervalle de fréquences à utiliser, il réduit par exemple le numéro de bloc physique de ressources N_{PRB} tout en gardant le même index I_{TBS}. La station de base 10 peut alors déterminer à partir des signaux reçus de l'équipement d'utilisateur 20 le nombre N_{PRB} et la position des blocs physiques de ressources utilisés par l'équipement d'utilisateur 20 et, par exemple, décider de lui allouer la taille de bloc de ressources correspondantes pour la suite de manière à libérer des ressources pour les autres équipements d'utilisateur 20. La station de base 10 peut ainsi anticiper le comportement des équipements d'utilisateur 20: si un équipements d'utilisateur 20 a réduit sa bande passante de manière significative sur une sous-trame, la station de base 10 sait qu'elle peut allouer moins de ressources à cet équipements d'utilisateur 20 dans les prochaines trames et ainsi conserver de la bande passante pour d'autres équipements d'utilisateur 20.

La figure 8 illustre un ensemble de courbes de puissance d'émission de signaux d'un équipement d'utilisateur 20 à destination d'une station de base 10. Dans cet exemple, la station de base 10 travaille en réception sur la bande de fréquences prédéterminées [788, 798] MHz qui est divisée en 50 blocs fréquentiels (non représentés).La limite de puissance hors-bande P_{LIM} est fixée à - 49 dBm mesurée dans une bande de résolution égale à 30 kHz à 799,2 MHz. Dans toute la suite, les valeurs de puissance sont mesurées dans une bande de résolution égale à 30 kHz.

La courbe C1 représente une courbe de puissance d'émission d'un équipement d'utilisateur sur l'intervalle de fréquences [792,1 ; 797,5] MHz, défini par RBstart = 20 et L_CRB=30, alloué par la station de base selon l'art antérieur et pour laquelle aucune réduction de puissance maximum n'a été appliquée. A 799,2 MHz, la courbe C1 se trouve aux environs de - 43 dBm, c'est à dire au-dessus de la puissance limite P_{LIM}.

La courbe C2 représente une courbe de puissance d'émission d'un équipement d'utilisateur, sur l'intervalle de fréquences [792,1 ; 797,5] MHz défini par RBstart = 20 et L_CRB = 30, alloué par la station de base selon l'art antérieur et pour laquelle une réduction de puissance maximum de 3 dB a été appliquée. A 799,2 MHz, la courbe C2 se trouve aux environs de - 46 dBm, c'est à dire au-dessus de la puissance limite P_{LIM}.

La courbe C3 représente une courbe de puissance d'émission d'un équipement d'utilisateur, sur l'intervalle de fréquences alloué [792,1 ; 797,5] MHz défini par RBstart = 20 et L_CRB = 30, alloué par la station de base selon l'art antérieur et pour laquelle une réduction de puissance maximum de 6 dB a été appliquée. A 799,2 MHz, la courbe C3 se trouve aux environs de - 53 dBm, c'est à dire en-dessous de la puissance limite P_{LIM}, à 799,2 MHz mais la puissance d'émission du signal a été réduite de 6 dB, c'est-à-dire divisée d'environ 4.

La courbe C4 représente une courbe de puissance d'émission d'un équipement d'utilisateur 20 pour laquelle aucune réduction de puissance maximum n'a été appliquée. Dans cet exemple, la station de base a sélectionné, dans l'étape E2 selon le premier mode de réalisation ou l'équipement d'utilisateur 20 a sélectionné, dans l'étape E20 selon le second mode de réalisation, à partir de la table de références, la même valeur de début d'intervalle que pour les trois courbes précédentes (RBstart = 20) mais une largeur d'intervalle de fréquences à utiliser réduite de moitié (L CRB = 15) qui garantit une émission à une puissance maximum non atténuée de l'équipement d'utilisateur 20 égale à celle de la courbe C1 (la courbe C4 représentant la puissance mesurée dans une bande de résolution de 30kHz se trouve donc 3dB au dessus de la courbe C1 dans l'intervalle de fréquence correspondant à l'allocation réduite de moitié dans le domaine fréquentiel). La courbe C4 se trouve aux environs de - 53 dBm, c'est à dire en-dessous de la puissance limite P_{LIM}, à 799,2 MHz pour une émission à puissance maximum non atténuée sur l'intervalle de fréquences défini par (RBstart = 20, L CRB = 15). La réduction de la largeur de l'intervalle déterminée à partir des valeurs de la table de références permet ainsi de s'assurer que la puissance d'émission hors-bande est inférieure à la valeur limite tout en évitant ici d'atténuer la puissance sur l'intervalle de fréquences d'émission utile déterminé.

Ainsi, dans le premier mode de réalisation, la station de base 10 détermine les allocations de ressource pour l'équipement d'utilisateur 20 à partir d'une table de références associée stockée ou reçue par la station de base 10. Dans ce premier mode de réalisation, la table de références est utilisée pour allouer les ressources. Dans l'exemple précédent, en l'absence de table de références, la station de base a alloué l'allocation de fréquences [792,1 ; 797.5] MHz (courbes C1 à C3). Afin de respecter la puissance d'émission hors-bande, l'équipement d'utilisateur aurait été contraint de réduire d'un facteur 4 environ (6dB) sa puissance d'émission (courbe C3). A partir de la table de références, la station de base a été en mesure de déterminer une allocation de fréquence réduite de moitié [792,1 ; 794,8] MHz (courbe C4) de sorte que l'équipement d'utilisateur n'est pas contraint de réduire sa puissance d'émission afin de respecter la puissance d'émission hors-bande. L'allocation de fréquences définie à partir de la table de références est donc avantageuse comparée à l'allocation de l'art antérieur définie sans la table de références.

Dans le second mode de réalisation, l'équipement d'utilisateur 20 reçoit de manière connue une information d'allocation d'un intervalle de fréquences et détermine lui-même à partir de la table de références un intervalle de fréquence, dans l'intervalle de fréquences alloué, lui permettant d'émettre des signaux en s'assurant que la puissance de ceux-ci soit inférieure à la limite hors-bande prédéfinie. Dans ce second mode, la table de références est utilisée pour définir, dans l'intervalle de fréquences alloué, l'intervalle de fréquences utile permettant une émission avec une atténuation de puissance minimum tout en garantissant une puissance hors-bande inférieure à la limite requise à la fréquence prédéfinie (courbe C4).

## Revendications

1. Procédé de détermination d'un intervalle de fréquences d'émission, par un équipement d'utilisateur, d'un signal à destination d'une station de base (10) dans un réseau de télécommunication (5), ledit intervalle de fréquences étant compris dans une bande de fréquences prédéterminée sur laquelle travaille la station de base (10), ledit procédé comprenant une étape de détermination dudit intervalle de fréquences, ladite étape de détermination (E2, E20) de l'intervalle de fréquences étant réalisée à partir d'une table de références comprenant des valeurs de réduction de puissance maximum d'émission d'un signal par l'équipement d'utilisateur (20) de sorte que la puissance du signal émis par l'équipement d'utilisateur (20) à une fréquence hors-bande prédéfinie soit inférieure à une valeur limite maximale (P_{LIM}) de puissance prédéterminée, **caractérisé en ce que** l'étape de détermination (E2, E20) de l'intervalle de fréquences (IFD1, IFD2) est réalisée par l'équipement d'utilisateur (20).

2. Procédé selon la revendication 1, dans lequel la table de références indique une valeur de réduction de puissance d'émission de signal en fonction, d'une part, d'une valeur de début (RBstart) d'un intervalle de fréquences et, d'autre part, d'une valeur de largeur (L_CRB) dudit intervalle de fréquences à partir de ladite valeur de début d'intervalle (RBstart).

3. Procédé selon la revendication 2, dans lequel l'étape de détermination (E2, E20) comprend une sélection dans la table de références du début (RBstart) et de la largeur (L_CRB) de l'intervalle de fréquences d'émission du signal par l'équipement d'utilisateur (20) de sorte que la puissance d'émission du signal par l'équipement d'utilisateur (20) soit maximum.

4. Système de télécommunications (1) pour la détermination d'un intervalle de fréquences d'émission, par un équipement d'utilisateur (20), d'un signal à destination d'une station de base (10) dans un réseau de télécommunication (5), ledit système (1) comprenant au moins une station de base (10) configurée pour travailler sur une bande de fréquences prédéterminée et au moins un équipement d'utilisateur (20) configuré pour émettre des signaux sur ladite bande de fréquence, ledit intervalle de fréquences étant compris dans ladite bande de fréquences prédéterminée, ledit système (1) étant caractérisé én ce que l'équipement utilisateur comprend des moyens de détermination (12, 22) de l'intervalle de fréquences à partir d'une table de références comprenant des valeurs de réduction de puissance maximum d'émission de signal par l'équipement d'utilisateur (20) de sorte que la puissance du signal émis par l'équipement d'utilisateur (20) à une fréquence hors-bande prédéfinie soit inférieure à une valeur limite maximale (P_{LIM}) de puissance prédéterminée.

5. Equipement d'utilisateur (20) pour la détermination d'un intervalle (IFD1, IFD2) de fréquences d'émission, par ledit équipement d'utilisateur (20), d'un signal à destination d'une station de base (10) dans un réseau de télécommunications (5), ledit intervalle de fréquences (IFD1, IFD2) étant compris dans une bande de fréquences prédéterminée sur laquelle travaille ladite station de base (10) et sur laquelle l'équipement d'utilisateur est configuré pour émettre des signaux, l'équipement d'utilisateur (20) étant **caractérisé en ce qu'**il comprend des moyens de détermination (22) de l'intervalle de fréquences (IFD1, IFD2) à partir d'une table de références comprenant des valeurs de réduction de puissance maximum d'émission de signal par l'équipement d'utilisateur (20) de sorte que la puissance du signal émis par l'équipement d'utilisateur (20) à une fréquence hors-bande prédéterminée soit inférieure à une valeur limite maximale (P_{LIM}) de puissance prédéterminée.

6. Support de programme d'ordinateur pour la mise en oeuvre, par un équipement d'utilisateur (20) selon la revendication 5, des étapes du procédé selon l'une des revendications 1 à 3.

## Patentansprüche

1. Bestimmungsverfahren eines Sendungsfrequenzintervalls durch eine Nutzerausrüstung, eines für eine Basisstation (10) in einem Telekommunikationsnetz (5) bestimmten Signals, wobei das genannte Frequenzintervall in einem vorbestimmten Frequenzbereich inbegriffen ist, in dem die Basisstation (10) arbeitet, wobei das genannte Verfahren einen Bestimmungsschritt des genannten Frequenzintervalls umfasst, wobei der genannte Bestimmungsschritt (E2, E20) des Frequenzintervalls ausgehend von einer Referenztabelle realisiert ist, die die maximalen Reduktionswerte der Sendungsleistung eines Signals durch die Nutzerausrüstung (20) derart umfassen, dass die Leistung des Signals, das durch die Nutzerausrüstung (20) in einer vorbestimmten Frequenz außerhalb des Bereichs ausgegeben wird, niedriger ist als ein maximaler Grenzwert (P_{LIM}) der vorbestimmten Leistung, **dadurch gekennzeichnet, dass** der Bestimmungsschritt (E2, E20) des Frequenzintervalls (IFS1, IFD2) durch die Nutzerausrüstung (20) realisiert ist.

2. Verfahren gemäß Anspruch 1, bei dem die Referenztabelle einen Reduktionswert der Sendungsleistung des Signals in Abhängigkeit einerseits eines Anfangswertes (RBstart) eines Frequenzintervalls und andererseits eines Breitenwertes (L_CRB) des genannten Frequenzintervalls ausgehend von dem genannten Anfangswert des Intervalls (RBstart) anzeigt.

3. Verfahren gemäß Anspruch 2, bei dem der Bestimmungsschritt (E2, E20) eine Auswahl in der Referenztabelle des Anfangs (RBstart) und der Breite (L_CRB) des Sendungsfrequenzintervalls des Signals durch die Nutzerausrüstung (20) derart umfasst, dass die Sendungsleistung des Signals durch die Nutzerausrüstung (20) maximal ist.

4. Telekommunikationssystem (1) für die Bestimmung eines Sendungsfrequenzintervalls durch eine Nutzerausrüstung (20) eines für eine Basisstation (10) bestimmten Signals in einem Telekommunikationsnetz (5), wobei das genannte System (1) wenigstens eine Basisstation (10) umfasst, die konfiguriert ist, um in einem vorbestimmten Frequenzbereich zu arbeiten, und wenigstens eine Nutzerausrüstung (20), die konfiguriert ist, um Signale in dem genannten Frequenzbereich auszugeben, wobei das genannte Frequenzintervall in dem genannten vorbestimmten Frequenzbereich inbegriffen ist, wobei das genannte System (1) **dadurch gekennzeichnet ist, dass** die Nutzerausrüstung Bestimmungsmittel (12, 22) des Frequenzintervalls ausgehend von einer Referenztabelle umfasst, umfassend maximale Reduktionswerte der Sendungsleistung des Signals durch die Nutzerausrüstung (20) derart, dass die Leistung des Signals, das durch die Nutzerausrüstung (20) in einer vorbestimmten Frequenz außerhalb des Bereichs ausgegeben wird, niedriger ist als ein maximale Grenzwert (P_{LIM}) der vorbestimmten Leistung.

5. Nutzerausrüstung (20) für die Bestimmung eines Sendungsfrequenzintervalls (IFD1, IFD2) durch die genannte Nutzerausrüstung (20) eines für eine Basisstation (10) in einem Telekommunikationsnetz (5) bestimmten Signals, wobei das genannte Frequenzintervall (IFD1, IFD2) in einem vorbestimmten Frequenzbereich inbegriffen ist, in dem die genannte Basisstation (10) arbeitet und in dem die Nutzerausrüstung konfiguriert ist, um Signale auszugeben, wobei die Nutzerausrüstung (20) **dadurch gekennzeichnet ist, dass** sie Bestimmungsmittel (22) des Frequenzintervalls (IFD1, IFD2) ausgehend von einer Referenztabelle umfasst, die maximale Reduktionwerte der Sendungsleistung des Signals durch die Nutzerausrüstung (20) derart umfassen, dass die Leistung des Signals, das durch die Nutzerausrüstung (20) in einer vorbestimmten Frequenz außerhalb des Bereichs ausgegeben wird, niedriger ist als ein maximale Grenzwert (P_{LIM}) der vorbestimmten Leistung.

6. Computerprogrammunterstützung für die Umsetzung der Schritte des Verfahrens gemäß einem der Ansprüche 1 bis 3 durch eine Nutzerausrüstung (20) gemäß Anspruch 5.

## Claims

1. Method for determining an interval of frequencies of transmission, by a user equipment, of a signal destined for a base station (10) in a telecommunication network (5), said interval of frequencies lying in a predetermined frequency band on which the base station (10) works, said method comprising a step of determining said interval of frequencies, said step of determining (E2, E20) the interval of frequencies being carried out on the basis of a table of references comprising values of reduction of maximum power of transmission of a signal by the user equipment (20) so that the power of the signal transmitted by the user equipment (20) at a predefined off-band frequency is less than a predetermined maximum limit value of power (PLIM), **characterized in that** the step of determining (E2, E20) the interval of frequencies (IFD1, IFD2) is carried out by the user equipment (20).

2. Method according to claim 1, in which the table of references indicates a value of reduction of power of transmission of a signal as a function, on the one hand, of a start value (RBstart) of an interval of frequencies and, on the other hand, of a value of the width (L_CRB) of said interval of frequencies from said start of interval value (RBstart).

3. Method according to claim 2, in which the step of determination (E2, E20) comprises a selection in the table of references of the start (RBstart) and of the width (L_CRB) of the interval of frequencies of transmission of the signal by the user equipment (20) so that the power of transmission of the signal by the user equipment (20) is maximum.

4. Telecommunications system (1) for determining an interval of frequencies of transmission, by a user equipment (20), of a signal destined for a base station (10) in a telecommunications network (5), said system (1) comprising at least one base station (10) configured to work on a predetermined frequency band and at least one user equipment (20) configured to transmit signals on said frequency band, said interval of frequencies lying in said predetermined frequency band, said system (1) being **characterised in that** the user equipment comprises means for determining (12, 22) the interval of frequencies from a table of references comprising values of reduction of maximum power of transmission of a signal by the user equipment (20) so that the power of the signal transmitted by the user equipment (20) at a predefined off-band frequency is less than a predetermined maximum limit value of power (PLIM).

5. User equipment (20) for determining an interval (IFD1, IFD2) of frequencies of transmission, by said user equipment (20), of a signal destined for a base station (10) in a telecommunications network (5), said interval of frequencies (IFD1, IFD2) lying in a predetermined frequency band on which said base station (10) works and on which the user equipment is configured to transmit signals, the user equipment (20) being **characterized in that** it comprises means for determining (22) the interval of frequencies (IFD1, IFD2) from a table of references comprising values of reduction of maximum power of transmission of a signal by the user equipment (20) so that the power of the signal transmitted by the user equipment (20) at a predetermined off-band frequency is less than a predetermined maximum limit value of power (PLIM).

6. Computer programme support for the implementation, by a user equipment (20) according to claim 5, of the steps of the method according to one of claims 1 to 3.
